# FASCICULE DE BREVET EUROPEEN

(11) **EP 1 875 268 B1**
(45) Date de publication et mention de la délivrance du brevet: **05.10.2011**
(21) Numéro de dépôt: 06754860.2
(22) Date de dépôt: 26.04.2006
(51) Int. Cl.: G01S 11/04, G01S 5/04

(54) **DISPOSITIF ET PROCEDE DE LOCALISATION PASSIVE DE CIBLES RAYONNANTES**
VORRICHTUNG UND VERFAHREN ZUR PASSIVEN LOKALISIERUNG VON BESTRAHLUNGSZIELEN
DEVICE AND METHOD FOR THE PASSIVE LOCALISATION OF RADIATING TARGETS

(30) Priorité: 26.04.2005 FR 0504192
(43) Date de publication de la demande: 09.01.2008
(73) Titulaire: THALES, 92200 NEUILLY SUR SEINE (FR)
(72) Inventeur: SAPE, Philippe, F-78180 Montigny-Le-Bretonneux (FR)
(74) Mandataire: Collet, Alain
(86) Numéro de dépôt international: PCT/EP2006/061837
(87) Numéro de publication internationale: WO 2006/114426

(56) Documents cités:
- EP-A- 1 359 436
- US-A- 4 728 958
- US-A- 4 746 924
- US-A1- 2005 052 315
- GEORGE W. STIMSON: "Airborne radar second edition" 1998, SCITECH PUBLISHING, INC , MENDHAM, NEW JERSEY , XP002362310 page 457 - page 460; figures 2,4; tableau 1
- TAUBENBERGER K ET AL: "SENSOR FUSION FOR MODERN FIGHTER AIRCRAFT" ADVANCED ARCHITECTURES FOR AEROSPACE MISSION SYSTEMS, 14 octobre 1996 (1996-10-14), pages 28-1, XP008014515

## Description

L'invention concerne un dispositif et un procédé de localisation passive de cibles rayonnantes.

Toutes les techniques actuelles de localisation passive mettent en oeuvre le principe de triangulation utilisant plusieurs mesures goniométriques de rayonnements reçus d'un émetteur.

Différentes techniques connues permettent de goniométrer des émetteurs à partir du rayonnement électromagnétique émis par ces derniers.

Une première technique, appelée goniométrie d'amplitude, est basée sur la mesure des amplitudes reçues par des antennes. Ces antennes sont généralement placées dans un porteur tel qu'un avion. Ces antennes possèdent des lobes de réceptions orientés différemment, ce qui permet de déterminer la direction d'arrivée du signal en analysant l'amplitude du signal reçu par chaque antenne. A partir de plusieurs mesures successives, lorsque le porteur se déplace, on détermine alors la position de l'émetteur par triangulation. Les précisions sur la mesure de la direction d'arrivée du signal sont de l'ordre de 10 degrés. Plusieurs minutes sont nécessaires pour atteindre une précision relative de l'ordre de 10% sur la distance entre la cible et le porteur.

Une autre technique, appelée interférométrie, est basée sur la mesure de la différence de phase du signal reçu entre deux antennes placées sur le porteur. Les deux antennes sont suffisamment éloignées pour mesurer cette différence de phase ce qui permet de déterminer la direction d'arrivée du signal par rapport au porteur. Comme pour la première technique, à partir de plusieurs mesures successives, lorsque le porteur se déplace, on détermine alors la position de la cible par triangulation. Les précisions sur la mesure de la direction d'arrivée du signal sont de l'ordre du degré. La précision sur la localisation de la cible s'en trouve améliorée. Il faut de l'ordre de 30 à 60 secondes pour atteindre une précision relative de 5% sur la distance entre la cible et le porteur.

Un inconvénient de ces techniques est l'impossibilité de localiser une cible mobile tel qu'un avion. En effet, il est nécessaire de réaliser plusieurs mesures angulaires et d'effectuer une triangulation entre ces mesures pour obtenir la position de la cible par rapport au porteur. Si le déplacement de la cible est notable entre les mesures, la triangulation devient impossible à moins de connaître le déplacement de la cible entre les mesures, ce qui n'est généralement pas le cas lorsque la cible est un avion.

La demande de brevet US 2005/052315A1 décrit un procédé et un dispositif basé sur l'échange d'informations de direction entre avions proteurs afin d'effectuer une triangulation. Ce document décrit exclusivement l'utilisation de capteurs hyperfréquence appartenant à un récepteur de guerre électronique.

L'article de George W. Stimson : « Airborne radar second edition » 1998, Scitech Publishoing, Inc Mendham, New Jersey décrit un procédé de localisation par triangulation à partir d'informations reçues exclusivement d'antennes radars utilisées en mode passif et équipant deux avions porteurs.

Un but de l'invention est de pallier les inconvénients précités et notamment de permettre de déterminer, à partir de plusieurs porteurs, la position d'un émetteur électromagnétique, tel qu'une antenne radar, de façon instantanée au moyen d'équipements déjà présent à bord des porteurs.

A cet effet, l'invention a pour objet un dispositif de localisation passive de cibles rayonnantes selon la revendication 1.
- L'invention a également pour objet un procédé de localisation passive de cibles rayonnantes selon la revendication 4.

L'invention a pour principal avantage d'être simple à installer sur les porteurs existants. L'invention utilise deux équipements généralement présents à bord d'avions militaires à savoir une antenne radar et des moyens de détermination passive de localisation angulaire et de triangulation, moyens appelés par la suite et connus sous l'appellation de récepteur de guerre électronique. Ce récepteur utilise généralement l'une des deux techniques de localisation mentionnées plus haut. Ce récepteur reçoit des informations électromagnétiques de plusieurs antennes passives spécialement dédiées. Pour mettre en oeuvre l'invention, il suffit, à l'intérieur du porteur, d'abonner le récepteur de guerre électronique à une antenne supplémentaire qui est l'antenne radar.

Un autre avantage lié à l'utilisation de l'antenne radar du porteur est que le gain de cette antenne est beaucoup plus important que le gain des antennes dédiées au récepteur de guerre électronique. Les antennes dédiées au récepteur de guerre électronique doivent être éclairées par le lobe principal de l'antenne d'émission de la cible pour opérer une détection. En revanche, il n'est pas nécessaire que le lobe principal de l'antenne de la cible éclaire le porteur pour que l'antenne radar détecte la position angulaire de la cible

Un autre avantage de l'invention est la rapidité d'obtention de la localisation de la cible. Il suffit en effet que les antennes radar des porteurs aient réalisé un balayage pour élaborer une première localisation de la cible.

Un autre avantage de l'invention est lié au fait que la détection de la cible est réalisée dans le secteur de balayage de l'antenne radar, c'est à dire le secteur avant du porteur. Ce secteur est généralement inaccessible au principe de localisation réalisée par le récepteur de guerre électronique car son domaine de fonctionnement est généralement orienté perpendiculairement à la direction du porteur. L'invention permet donc une localisation de cibles rayonnantes situées dans le secteur avant du porteur et sans utiliser le radar du porteur en mode actif. Pour effectuer la localisation l'antenne radar du porteur peut ne fonctionner qu'en mode réception ce qui améliore la discrétion du porteur.

Encore un autre avantage lié à l'utilisation de l'antenne radar du porteur est que la plupart des antennes radars embarquées à bord de porteurs travaillent généralement dans la même bande de fréquence. L'antenne radar du porteur pourra donc détecter la plupart des émissions de radars embarqués.

L'invention sera mieux comprise et d'autres avantages apparaîtront à la lecture de la description détaillée d'un mode de réalisation donné à titre d'exemple, description illustrée par le dessin joint dans lequel :
la figure 1 représente une situation où deux porteurs cherchent à détecter une cible ;
la figure 2 représente schématiquement les différents équipements nécessaires pour mettre en oeuvre l'invention.

Pour une meilleure compréhension, les mêmes éléments porteront les mêmes repères dans les différentes figures.

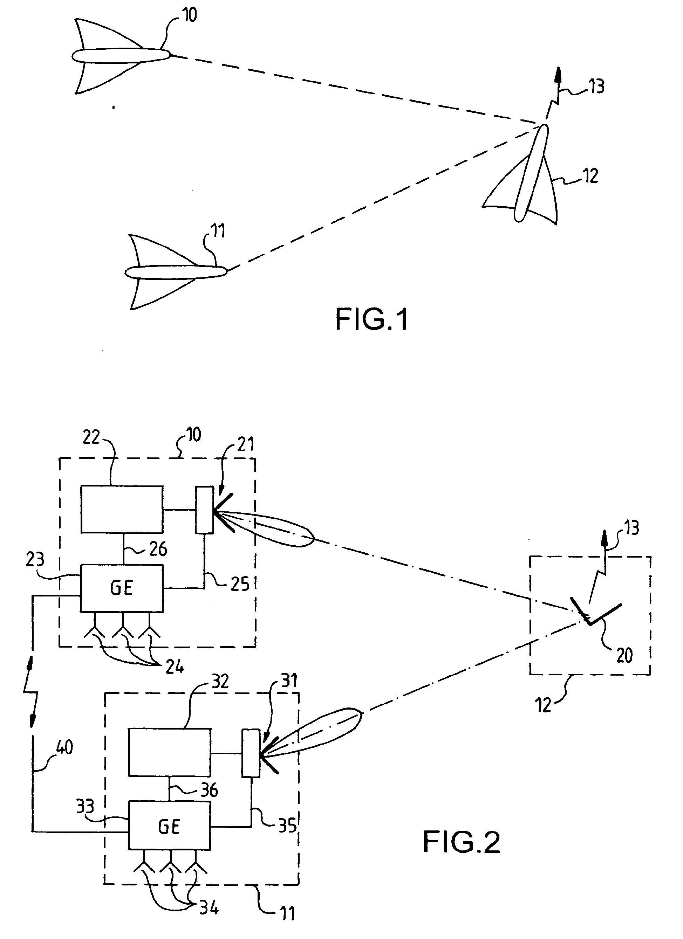

La figure 1 représente deux porteurs 10 et 11 et une cible 12. Les porteurs 10 et 11 et la cible 12 sont par exemple des avions en mouvement. Il est bien entendu possible que les porteurs et la cible soient à l'arrêt. La cible 12 émet un rayonnement électromagnétique 13 vers son avant. La cible 12 est située dans le secteur avant des deux porteurs 10 et 11.
La figure 2 représente, pour chaque porteur 10 et 11, les équipements nécessaires pour mettre en oeuvre l'invention. La cible 12 émet un rayonnement électromagnétique 13 au moyen par exemple d'une antenne radar 20.

Le porteur 10 comporte une antenne radar 21, des moyens de pilotage 22 de l'antenne radar 21, un récepteur de guerre électronique 23 associé à des antennes 24. Conformément à l'invention, le porteur 10 comporte une liaison 25 entre l'antenne radar 21 et le récepteur de guerre électronique 23.

De même le porteur 11 comporte une antenne radar 31, des moyens de pilotage 32 de l'antenne radar 31, un récepteur de guerre électronique 33 associé à des antennes 34. Le porteur 11 comporte également une liaison 35 entre l'antenne radar 31 et le récepteur de guerre électronique 33.

La fonction principale des antennes radar 21 et 31 est de réaliser la détection de cibles en émettant un signal électromagnétique et en analysant l'écho du signal sur les cibles. En revanche pour les besoins de l'invention, l'antenne radar n'est utilisée qu'en réception sans émettre de rayonnement. Ce fonctionnement de l'antenne radar 21 ou 31 est appelé mode de réception passif.

Les liaisons 25 et 35 transmettent des antennes radar, respectivement 21 et 31, une information sur la position angulaire de la cible 12 par rapport au porteur 10 ou 11 vers les récepteurs de guerre électronique respectivement 23 et 33. Plus précisément l'antenne radar 21 ou 31 effectue un balayage angulaire de l'espace dans lequel la cible 12 est recherchée. L'antenne radar 21 ou 31 transmet vers le récepteur de guerre électronique 23 ou 33 l'amplitude de rayonnements détectés dans l'espace exploré ou plus généralement le signal reçu par l'antenne radar 21 ou 31 ainsi que la position angulaire de l'antenne radar 21 ou 31. Les antennes radar 21 et 31, ayant un lobe de réception très directif, permettent de déterminer avec précision la position angulaire d'un rayonnement détecté. A titre d'alternative, les informations de position angulaire des antennes radar 21 et 31 peuvent être transmises par les moyens de pilotage 22 ou 32 vers le récepteur de guerre électronique 23 ou 33 au moyen d'une liaison, respectivement 26 et 36, sans passer par l'antenne radar 21 ou 31. Le récepteur de guerre électronique 23 ou 33 analyse les informations de position angulaire et d'amplitude en vue d'identifier la cible 12 et de la localiser angulairement.

Le dispositif comporte en outre une liaison 40 entre les récepteurs de guerre électronique 23 et 33. Cette liaison permet d'échanger les informations de direction de la cible 12 entre les deux porteurs 10 et 11 ainsi que la position relative des deux porteurs 10 et 11. Cet échange d'information permet à l'un des deux récepteurs 23 ou 33 d'effectuer un calcul de triangulation pour déterminer la position de la cible 12 par rapport au porteur dont le récepteur effectue le calcul.

Pour utiliser le dispositif précédemment décrit, un procédé consiste à enchaîner les opérations suivantes :
- sur chaque porteur 10 et 11, piloter l'antenne radar respectivement 21 et 31, de façon à balayer un espace angulaire où une cible 12 est recherchée,
- durant le balayage, capter et goniométrer au moyen de l'antenne radar 21 ou 31 utilisée en mode de réception passif une émission de la cible 12,
- caractériser à l'aide du récepteur de guerre électronique 23 ou 33 les paramètres radioélectriques de l'émission de la cible 12,
- échanger le résultat de la caractérisation entre les deux porteurs 10 et 11,
- déterminer par triangulation la position de la cible 12.

L'opération de caractérisation est réalisée sur chacun des porteurs 10 et 11 afin que la détection réalisée par chaque porteur par l'intermédiaire de son antenne radar concerne la même cible 12.

Avantageusement, pour améliorer la précision dans la détermination de la position de la cible 12 par triangulation, les opérations de balayage sont réalisées simultanément sur les deux porteurs 10 et 11.

Avantageusement, après avoir déterminé par triangulation la position de la cible 12, on piste la cible 12 à partir de ses caractéristiques radioélectriques et cinématiques. Plus précisément, les caractéristiques radioélectriques de la cible 12 sont essentiellement la fréquence, la largeur d'impulsion et la période de répétition des impulsions. Les caractéristiques cinématiques sont essentiellement la position de la cible 12.

Les caractéristiques radioélectriques et cinématiques sont déterminées par les moyens 23 ou 33 de détermination passive de localisation angulaire et de triangulation.

## Revendications

1. Dispositif de localisation passive de cibles rayonnantes (12), comportant un premier porteur (10) équipé d'une antenne radar (21) et de moyens (23) de détermination passive de localisation angulaire et de triangulation, de type récepteur de guerre électronique, un second porteur (11) équipé d'une antenne radar (31) et de moyens (33) de détermination passive de localisation angulaire et de triangulation, également de type récepteur de guerre électronique, pour chaque porteur (10, 11), une première liaison (40) entre les moyens (23, 33) de détermination passive de localisation angulaire et de triangulation de chaque porteur (10, 11) permettant d'échanger les informations, **caractérisé en ce qu'**il comporte en outre une seconde liaison (25, 35) transmettant de l'antenne radar (21, 31) vers les moyens respectifs (23, 33) de détermination passive de localisation angulaire et de triangulation une information sur la position angulaire de la cible rayonnante (12), ce qui revient à abonner le récepteur de guerre électronique de chaque porteur (10, 11) à une antenne supplémentaire qui est l'antenne radar respective (10, 11) du porteur considéré.

2. Dispositif selon la revendication 1, **caractérisé en ce que** la seconde liaison (25, 35) transmet une information de position angulaire de l'antenne radar (21, 31) et une information sur le signal reçu par l'antenne radar (21, 31).

3. Dispositif selon la revendication 1, **caractérisé en ce que** chaque porteur (10, 11) comporte des moyens de pilotage (22, 32) de l'antenne radar (21, 31), une troisième liaison (26, 36) entre les moyens de pilotage (22, 32) et les moyens de détermination passive de localisation angulaire et de triangulation (23, 33), **en ce que** les moyens de pilotage (22, 32) permettent à l'antenne radar (21, 31) de balayer un espace angulaire et **en ce que** la troisième liaison (26, 36) transmet aux moyens de détermination passive de localisation angulaire et de triangulation (23, 33) une information de position angulaire de l'antenne radar (21, 31).

4. Procédé de localisation passive de cibles rayonnantes (12) utilisant un dispositif comportant un premier porteur (10) équipé d'une antenne radar (21) et de moyens (23) de détermination passive de localisation angulaire et de triangulation, de type récepteur de guerre électronique, un second porteur (11) équipé d'une antenne radar (31) et de moyens (33) de détermination passive de localisation angulaire et de triangulation, également de type récepteur de guerre électronique, pour chaque porteur (10, 11), une première liaison (40) entre les moyens (23, 33) de détermination passive de localisation angulaire et de triangulation de chaque porteur (10, 11) permettant d'échanger les informations **caractérisé en ce que** le dispositif comporte en outre une seconde liaison (25, 35) transmettant de l'antenne radar (21, 31) vers les moyens respectifs (23, 33) de détermination passive de localisation angulaire et de triangulation une information sur la position angulaire de la cible rayonnante (12), ce qui revient à abonner le récepteur de guerre électronique de chaque porteur (10, 11) à une antenne supplémentaire qui est l'antenne radar respective (10, 11) du porteur considéré, ,
et **en ce que** le procédé consiste à :
• sur chaque porteur (10, 11), piloter l'antenne radar (21, 31) de façon à balayer un espace angulaire où la cible (12) est recherchée,
• durant le balayage, capter et goniométrer au moyen de l'antenne radar (21, 31) utilisée en mode de réception passif une émission de la cible (12),
• caractériser à l'aide des moyens de détermination passive de localisation angulaire et de triangulation (23, 33) les paramètres radioélectriques de l'émission de la cible (12),
• échanger le résultat de la caractérisation entre les deux porteurs (10, 11),
• déterminer par triangulation la position de la cible (12).

5. Procédé selon la revendication 4, **caractérisé en ce que** sur les deux porteurs (10, 11), les opérations de balayage sont réalisées simultanément.

6. Procédé selon l'une des revendications 4 ou 5, **caractérisé en ce qu'**après avoir déterminé par triangulation la position de la cible (12), on piste la cible (12) à partir de ses caractéristiques radioélectriques et cinématiques.

## Claims

1. A device for passively locating radiating targets (12), comprising a first carrier (10) equipped with a radar antenna (21) and with means (23) for passively determining angular location and triangulation, of the electronic warfare receiver type, a second carrier (11) equipped with a radar antenna (31) and means (33) for passively determining angular location and triangulation, also of the electronic warfare receiver type, for each carrier (10, 11), a first connection (40) between the means (23, 33) for passively determining the angular location and triangulation of each carrier (10, 11), which allows information to be exchanged, **characterised in that** it further comprises a second connection (25, 35) transmitting from the radar antenna (21, 31) to the respective means (23, 33) for passively determining angular location and triangulation information relating to the angular position of the radiating target (12), which effectively associates the electronic warfare receiver of each carrier (10, 11) with an additional antenna, which antenna is the respective radar antenna (10, 11) of the considered carrier.

2. The device according to claim 1, **characterised in that** the second connection (25, 35) transmits information relating to the angular position of the radar antenna (21, 31) and information relating to the signal received by said radar antenna (21, 31).

3. The device according to claim 1, **characterised in that** each carrier (10, 11) comprises means for controlling (22, 32) the radar antenna (21, 31), a third connection (26, 36) between the control means (22, 32) and the means for passively determining angular location and triangulation (23, 33), **in that** the control means (22, 32) allow the radar antenna (21, 31) to scan an angular space and **in that** the third connection (26, 36) transmits information relating to the angular position of the radar antenna (21, 31) to the means for passively determining angular location and triangulation (23, 33).

4. A method for passively locating radiating targets (12) using a device, comprising a first carrier (10) equipped with a radar antenna (21) and means (23) for passively determining angular location and triangulation, of the electronic warfare receiver type, a second carrier (11) equipped with a radar antenna (31) and means (33) for passively determining angular location and triangulation, also of the electronic warfare receiver type, for each carrier (10, 11), a first connection (40) between the means (23, 33) for passively determining angular location and triangulation of each carrier (10, 11), which allows information to be exchanged, **characterised in that** said device further comprises a second connection (25, 35) transmitting from the radar antenna (21, 31) to the respective means (23, 33) for passively determining angular location and triangulation information relating to the angular position of the radiating target (12), which effectively associates the electronic warfare receiver of each carrier (10, 11) with an additional antenna, which antenna is the respective radar antenna (10, 11) of the considered carrier,
and **in that** the method consists in:
• controlling the radar antenna (21, 31) on each carrier (10, 11) so as to scan an angular space in which the target (12) is searched;
• capturing and direction finding, during scanning, an emission from the target (12) by means of the radar antenna (21, 31) used in the passive receiving mode;
• characterising, using the means for passively determining angular location and triangulation (23, 33), the radioelectric parameters of the emission from the target (12);
• exchanging the result of the characterisation between the two carriers (10, 11);
• determining the position of the target (12) by triangulation.

5. The method according to claim 4, **characterised in that** the scanning operations are undertaken simultaneously on the two carriers (10, 11).

6. The method according to claim 4 or 5, **characterised in that** once the position of the target (12) has been determined by triangulation, said target (12) is tracked based on its radioelectric and kinematic characteristics.

## Patentansprüche

1. Vorrichtung zum passiven Orten von strahlenden Zielen (12), die Folgendes umfasst: einen ersten Träger (10), der mit einer Radarantenne (21) und mit Mitteln (23) zum passiven Ermitteln von Winkelposition und Triangulation ausgestattet ist, vom Empfängertyp für elektronische Kriegsführung, einen zweiten Träger (11), der mit einer Radarantenne (31) und mit Mitteln (33) zum passiven Ermitteln von Winkelposition und Triangulation ausgestattet ist, ebenfalls vom Empfängertyp für elektronische Kriegsführung, für jeden Träger (10, 11) eine erste Verbindung (40) zwischen den Mitteln (23, 33) zum passiven Ermitteln von Winkelposition und Triangulation jedes Trägers (10, 11) zum Austauschen von Informationen, **dadurch gekennzeichnet, dass** sie ferner eine zweite Verbindung (25, 35) zum Senden einer Information über die Winkelposition des strahlenden Ziels (12) von der Radarantenne (21, 31) zu den jeweiligen Mitteln (23, 33) zum passiven Ermitteln von Winkelposition und Triangulation umfasst, wodurch der Empfänger für elektronische Kriegsführung jedes Trägers (10, 11) effektiv einer zusätzlichen Antenne zugeordnet wird, die die jeweilige Radarantenne (10, 11) des betrachteten Trägers ist.

2. Vorrichtung nach Anspruch 1, **dadurch gekennzeichnet, dass** die zweite Verbindung (25, 35) eine Information über die Winkelposition der Radarantenne (21, 31) und eine Information über das von der Radarantenne (21, 31) empfangene Signal überträgt.

3. Vorrichtung nach Anspruch 1, **dadurch gekennzeichnet, dass** jeder Träger (10, 11) Mittel zum Steuern (22, 32) der Radarantenne (21, 31), eine dritte Verbindung (26, 36) zwischen den Steuermitteln (22, 32) und den Mitteln zum passiven Ermitteln von Winkelposition und Triangulation (23, 33) umfasst, dadurch, dass die Steuermittel (22, 32) es zulassen, dass die Radarantenne (21, 31) einen Winkelraum abtastet, und dadurch, dass die dritte Verbindung (26, 36) eine Information über die Winkelposition der Radarantenne (21, 31) zu den Mitteln zum passiven Ermitteln von Winkelposition und Triangulation (23, 33) überträgt.

4. Verfahren zum passiven Orten von strahlenden Zielen (12) mit einer Vorrichtung, die Folgendes umfasst: einen ersten Träger (10), der mit einer Radarantenne (21) und mit Mitteln (23) zum passiven Ermitteln von Winkelposition und Triangulation ausgestattet ist, vom Empfängertyp für elektronische Kriegsführung, einen zweiten Träger (11), der mit einer Radarantenne (31) und mit Mitteln (33) zum passiven Ermitteln von Winkelposition und Triangulation ausgestattet ist, ebenfalls vom Empfängertyp für elektronische Kriegsführung, für jeden Träger (10, 11) eine erste Verbindung (40) zwischen den Mitteln (23, 33) zum passiven Ermitteln von Winkelposition und Triangulation jedes Trägers (10, 11) zum Austauschen von Informationen, **dadurch gekennzeichnet, dass** die Vorrichtung ferner eine zweite Verbindung (25, 35) zum Senden einer Information über die Winkelposition des strahlenden Ziels (12) von der Radarantenne (21, 31) zu den jeweiligen Mitteln (23, 33) zum passiven Ermitteln von Winkelposition und Triangulation umfasst, wodurch der Empfänger für elektronische Kriegsführung jedes Trägers (10, 11) effektiv einer zusätzlichen Antenne zugeordnet wird, die die jeweilige Radarantenne (10, 11) des betrachteten Trägers ist,
und dadurch, dass das Verfahren Folgendes beinhaltet:
• Steuern der Radarantenne (21, 31) an jedem Träger (10, 11), um einen Winkelraum abzutasten, in dem das Ziel (12) gesucht wird;
• Erfassen und Orten, beim Abtasten, einer Emission von dem Ziel (12) mittels der in dem passiven Empfangsmodus verwendeten Radarantenne (21, 31);
• Charakterisieren, unter Verwendung der Mittel zum passiven Ermitteln von Winkelposition und Triangulation (23, 33), der radioelektrischen Parameter der Emission von dem Ziel (12);
• Austauschen des Ergebnisses der Charakterisierung zwischen den beiden Trägern (10, 11);
• Ermitteln der Position des Ziels (12) durch Triangulation.

5. Verfahren nach Anspruch 4, **dadurch gekennzeichnet, dass** die Abtastoperationen an den beiden Trägern (10, 11) gleichzeitig durchgeführt werden.

6. Verfahren nach Anspruch 4 oder 5, **dadurch gekennzeichnet, dass** das Ziel (12) auf der Basis seiner radioelektrischen und kinematischen Charakteristiken verfolgt wird, nachdem die Position des Ziels (12) durch Triangulation bestimmt wurde.
